# EUROPEAN PATENT SPECIFICATION

(11) **EP 1 624 080 B1**
(45) Date of publication and mention of the grant of the patent: **02.06.2010**
(21) Application number: 04721699.9
(22) Date of filing: 18.03.2004
(51) Int. Cl.: C22B 21/06, C22B 9/02, C22B 9/05

(54) **ALUMINIUM RAW MATERIAL FOR REFINING, METHOD OF ALUMIUM MELT REFINING THEREWITH AND METHOD OF PRODUCING HIGH-PURITY ALUMINIUM FOR ELECTRODES OF ELECTROLYTIC CAPACITORS**
ALUMINIUMROHMATERIAL FÜR DIE ALUMINIUMRAFFINATION, SCHMELZVERFAHREN ZUR RAFFINATION SOLCHEN ALUMINIUMS UND HERSTELLUNG VON REINALUMINIUMMATERIAL DARAUS FÜR ELECTROLYTKONDENSATORELEKTRODEN
MATIÈRE PREMIÈRE EN ALUMINIUM POUR L'AFFINAGE DE L'ALUMINIUM, PROCÉDÉ D'AFFINAGE EN FUSION DE CET ALUMINIUM ET PROCÉDÉ DE FABRICATION D'UN ALUMINIUM PURIFIÉ POUR ÉLECTRODES DE CONDENSATEUR ÉLECTROLYTIQUE

(30) Priority: 18.03.2003 JP 2003073398; 12.03.2004 JP 2004070896
(43) Date of publication of application: 08.02.2006
(73) Proprietor: Showa Denko K.K., Tokyo 105-8518 (JP)
(72) Inventor: YOSHIDA, Katsuoki, c/o Showa Denko K.K., Sakai-shi, Osaka 590-0982 (JP); MAEDA, Masao, c/o Showa Denko K.K., Sakai-shi, Osaka 590-0982 (JP); SAKAGUCHI, Masashi, c/o Showa Denko K.K., Sakai-shi, Osaka 590-0982 (JP)
(74) Representative: Viering, Hans-Martin
(86) International application number: PCT/JP2004/003688
(87) International publication number: WO 2004/083470

(56) References cited:
- JP-A- 9 194 964
- JP-A- 2002 097 528
- JP-A- 2002 155 322
- JP-A- 2002 155 322
- DATABASE WPI Week 200247 Derwent Publications Ltd., London, GB; AN 2002-440278 XP002428030 & JP 2002 097528 A (SUMITOMO CHEM CO LTD) 2 April 2002 (2002-04-02)

## Description

The present invention relates to an aluminum refining method for obtaining a high purity aluminum by removing peritectic elements, an aluminum raw material for use in the refining method, and a method of producing an aluminum material for electrodes for electrolytic capacitors.

In this specification, the wording of "aluminum" is used to include the meaning of both an aluminum and its alloy.

### Background Art

As an aluminum refining method using the principle of segregation solidification, the following method is known. In this method, a rotation cooling member is immersed in an aluminum molten metal containing eutectic impurities, and the cooling member is rotated while supplying cooling fluid in the cooling member to crystallize a high purity aluminum on the external peripheral surface of the cooling member. The reason that a high purity aluminum can be obtained by such a method is that the equilibrium segregation coefficient of the eutectic element is smaller than 1 (see, e.g., the following Patent Document 1).

However, an aluminum molten metal to be refined includes peritectic impurities, such as Ti, Zr and V, which produce a peritectoid with an aluminum, as well as eutectic impurities. The equilibrium segregation coefficient of such peritectic impurities are larger than 1. Therefore, according to the method disclosed in Patent Document 1, the peritectic impurity concentration of the refined ingot becomes higher than that of the original molten aluminum.

In view of the above, the present applicant proposed an aluminum refining method in which elimination of peritectic impurities is performed using B and thereafter segregation solidification is performed (see the following Patent Documents 2 and 3).

In the refining method disclosed in Patent Document 2, an aluminum molten metal is fed into a processing gas injection chamber, and then B is added to the aluminum molten metal before injecting processing gas. Subsequently, they are stirred in the processing gas injection chamber to react B with the peritectic impurities, making the insoluble boride formed by the reacting come up to the molten metal surface by injecting processing gas. Then the surfaced boride is removed to decrease the peritectic impurities. Thereafter, refining by segregation solidification is performed to the molten metal from which peritectic impurities are removed.

In the refining method disclosed in Patent Document 3, segregation solidification is performed in a molten metal in which boride with peritectic impurities is formed by adding B to remove the peritectic impurities. Then, the aluminum ingot obtained at this step is repeatedly molten to perform the refining thereof by segregation solidification, thereby increasing the aluminum purity.
Patent Document 1: Japanese Examined Laid-open Patent Publication No. S61-3385
Patent Document 2: Japanese Unexamined Laid-open Patent Publication No. H9-194964
Patent Document 3: Japanese Unexamined Laid-open Patent Publication No. H10-102158

However, there is a problem that, in cases where peritectic impurities such as Ti, Zr and V are removed by several ppm, B should be added by an amount more than a total chemical equivalent calculated as TiB₂, ZrB₂, VB₂, or the molten metal is held (or stirred) for a long period of time after the adding of B. Otherwise, the peritectic impurities cannot be effectively removed. Especially, in the continuous processing method as disclosed in the aforementioned Patent Document 2, as compared with batch processing, there is a limit in the reaction time for reacting B with peritectic impurities, and therefore there is no other choice than to add a large amount of excessive B in order to effectively remove the peritectic impurities. The excessively added B is an eutectic impurity and can be removed by the principle of segregation solidification in the purification chamber. However, if the added amount is large, it cannot be removed completely, and therefore a small amount of B remains in the aluminum ingot crystallized on the external peripheral surface of the hollow rotation cooling member.

Furthermore, in the method as disclosed in Patent Document 3 in which the refining step is repeated two times or more, there are problems that the productivity was poor and the cost was expensive.

In view of the aforementioned technical background, the present invention aims to provide an aluminum refining method capable of producing a high purity aluminum by efficiently removing peritectic elements contained in an aluminum as impurities and further removing boron used to remove the peritectic impurities, an aluminum refining raw material for the refining method, a high purity aluminum material to be produced by the refining method, a method for manufacturing an aluminum material for electrolytic capacitor electrodes, and an aluminum material for electrolytic capacitor electrodes.

In order to attain the aforementioned objects, an aluminum raw material for aluminum refining has each following composition as recited in the following Items (1) or (2).
(1) an aluminum raw material for being refined, characterized in that the raw material comprises:
   a peritectic element forming a peritectoid with aluminum wherein the peritectic element is at least one or more elements selected from Ti, Zr or V; and boron,
   wherein the boron is contained excessively by 5 to 80 mass ppm to a total chemical equivalent calculated as a metal boride with the peritectic element.
(2) The raw material as recited in the aforementioned Item 1, wherein the excessive amount of the boron is 15 to 50 mass ppm.
   The refining method according to the present invention has the following each structure (3) to (8).
(3) An aluminum refining method, characterized in that the method comprises:
   a melting step in which the raw material for aluminum refining as recited in any one of the aforementioned Items 1 or 2 is melted into a molten metal; and
   a reacting step in which a metal boride is formed by reacting the peritectic element and the boron in the molten metal and a formed metal boride and the metal boride formed at the melting step are removed to thereby remove the peritectic element.
(4) The aluminum refining method as recited in the aforementioned Item 3, wherein after the reacting step, a segregation solidification step in which a high purity aluminum from which an eutectic element containing unreacted boron is removed by segregation solidification is crystallized from the molten metal obtained in the reacting step.
(5) The aluminum refining method as recited in the aforementioned Item 3 or 4, wherein at the reacting step, the metal boride formed is floated to a molten metal surface by injecting a processing gas in the molten metal.
(6) The aluminum refining method as recited in the aforementioned Item 4 or 5, wherein at the segregation solidification step, a cooling member held in the molten metal at a temperature not higher than a solidification temperature of the molten metal is rotated to crystallize a high purity aluminum on an external peripheral surface of the cooling member.
(7) The aluminum refining method as recited in any one of the aforementioned Items 3 to 6, wherein the molten metal obtained at the melting step is moved to a reaction chamber for executing the reaction step.
(8) The aluminum refining method as recited in any one of the aforementioned Items 4 to 7, wherein the molten metal obtained at the reacting step is moved to a refining chamber for executing the segregation solidification.
   A high purity aluminum material can be manufactured by the aluminum refining method as recited in any one of the aforementioned Items 3 to 8.
   The method for manufacturing an aluminum material for electrolytic capacitor electrodes according to the present invention has the following structures (9) and (10).
(9) A method for manufacturing an aluminum material for electrolytic capacitor electrodes, characterized in that the method comprises:
   a melting step in which the raw material for aluminum refining as recited in the aforementioned Item 1 or 2 is melted into a molten metal;
   a reacting step in which a metal boride is formed by reacting the peritectic element and the boron in the molten metal and a formed metal boride and the metal boride formed at the melting step are removed to thereby remove the peritectic element;
   a segregation solidification step in which after the reacting step, a high purity aluminum from which an eutectic element containing unreacted boron is removed by segregation solidification is crystallized from the molten metal obtained in the reacting step; and
   a forming step for forming the high purity aluminum.
(10) The method for manufacturing an aluminum material for electrolytic capacitor electrodes as recited in the aforementioned Item 9, wherein the forming step includes a step for forming the high purity aluminum into a final thickness of 10 to 200 µm.

An aluminum material for electrolytic capacitor electrodes can be manufactured by the method as recited in the aforementioned Item 9 or 10.

According to the raw material for being refined of the present invention as recited in the aforementioned Item (1), since the boron is contained excessively by 5 to 80 mass ppm to a total chemical equivalent calculated as a metal boride with the peritectic element, a high purity aluminum can be obtained by subjecting the raw material to the refining method of the invention.

According to the raw material for aluminum refining of the invention as recited in the aforementioned Item (1), the peritectic element is at least one or more elements selected from the group consisting of Ti, Zr and V, and these elements can be removed by the refining.

According to the raw material for aluminum refining of the invention as recited in the aforementioned Item (2), since the excessive amount of boron is 15 to 50 mass ppm, the removal of the peritectic element can be performed efficiently.

According to the raw material for aluminum refining of the invention as recited in the aforementioned Item (1) or (2), since the raw material can be refined into a high purity aluminum, the raw material can be preferably utilized as a material for manufacturing aluminum material for electrolytic capacitor electrodes.

According to the aluminum refining method of the invention as recited in the aforementioned Item (3), since boron of a certain concentration is contained in the raw material for aluminum refining, the peritectic element reacts with the boron at the stage of the melting step, resulting in a long reaction time in addition to the reaction time of the reacting step, thereby forming a larger amount of a metal boride while decreasing the peritectic element. Furthermore, since the thermal energy of the melting can be utilized for the reaction, energy cost can be decreased.

In cases where segregation solidification is executed after the reacting step for removing a metal boride according to the invention as recited in the aforementioned Item (4), an eutectic element containing unreacted boron can be removed from the molten metal, which in turn enables to obtain an aluminum with higher purity.

In cases where a processing gas is injected to the molten metal at the reacting step according to the invention as recited in the aforementioned Item (5), since the formed metal boride goes up, the metal boride can be easily removed.

By rotating the cooling member in the molten metal at the segregation solidification step according to the invention as recited in the aforementioned Item (6), a high purity aluminum alloy can be obtained assuredly.

In cases where consecutive processing in which reacting steps are performed by moving the molten metal obtained at the melting step to the reaction chambers is performed according to the invention as recited in the aforementioned Item (7), the productivity of a high purity aluminum is good.

In cases where consecutive processing in which segregation solidification step is performed by moving the molten metal obtained at the reacting step to the purification chamber is performed according to the invention as recited in the aforementioned Item (8), the productivity of a high purity aluminum is good.

The high purity aluminum material prepared according to the method of the invention is an aluminum material manufactured by the aforementioned refining method and a high purity aluminum material from which the peritectic element and/or the eutectic element are removed. Such aluminum material can be preferably used as a material for various electronic materials requiring high purity.

In the method for manufacturing an aluminum material for electrolytic capacitor electrodes according to the invention as recited in the aforementioned Item (9), a forming step for forming into a predetermined shape is executed to the high purity aluminum obtained through the step of melting step, the reacting step and the segregation solidification step. Therefore, an electrode material having high aluminum purity can be manufactured.

According to the invention as recited in the aforementioned Item (10), an electrode material with a final thickness of 10 to 200 µm can be manufactured.

The aluminum material for electrolytic capacitor electrodes prepared according to the invention has high aluminum purity and excellent etching characteristic. Therefore, a high capacitance can be attained by subjecting the material to etching and formation of the dielectric.

### Brief Description of Drawings

Fig. 1 is a partial vertical cross-sectional view showing a refining apparatus for use in an aluminum refining method according to the present invention.
Fig. 2 is an enlarged cross-sectional view taken along the line II-II in Fig. 1.

### Description of preferred embodiments

As impurities usually contained in a raw material for aluminum refining, there are peritectic elements, such as Ti, Zr and V, which forms peritectoid with an aluminum, and eutectic elements, such as Fe, Si, Cu and Mg, which forms eutectic with an aluminum. In the aluminum refining method according to the present invention, peritectic elements contained in an aluminum raw material for being refined are removed as a metal boride with boron, and eutectic elements containing boron are further removed by segregation solidification as needed. Boron is not added after the melting. As a raw material to be subjected to refining, a raw material in which a boron concentration is controlled so as to be appropriate to compound creation with contained peritectic elements is used.

In a raw material, one or more elements selected from the group consisting of T, Zr and V can be contained as peritectic elements. Each element forms a metal boride such as TiB₂, ZrB₂ or VB₂ with boron.

The boron concentration in a raw material is controlled such that the concentration exceeds the total chemical equivalent calculated as the aforementioned metal boride by 5 to 80 mass ppm. If the excessive amount is less than 5 mass ppm, reaction with peritectic elements become insufficient, causing a large amount of unreacted peritectic elements to remain in the refining lump. Thus, high purity aluminum cannot be obtained. On the other hand, if the excessive amount exceeds 80 mass ppm, although the amount of unreacted peritectic elements decreases, a large amount of unreacted boron remains. Thus, high purity aluminum cannot be obtained. The preferable excessive amount of boron is 15 to 50 mass ppm.

A raw material of the present invention can be used as a material for producing aluminum material for electrolytic capacitor electrodes.

The production method of the aforementioned raw material is not limited. The material can be obtained by adding an Al-B mother alloy to the aluminum before casting and after refining or injecting BF₃ gas so that a prescribed boron concentration can be obtained.

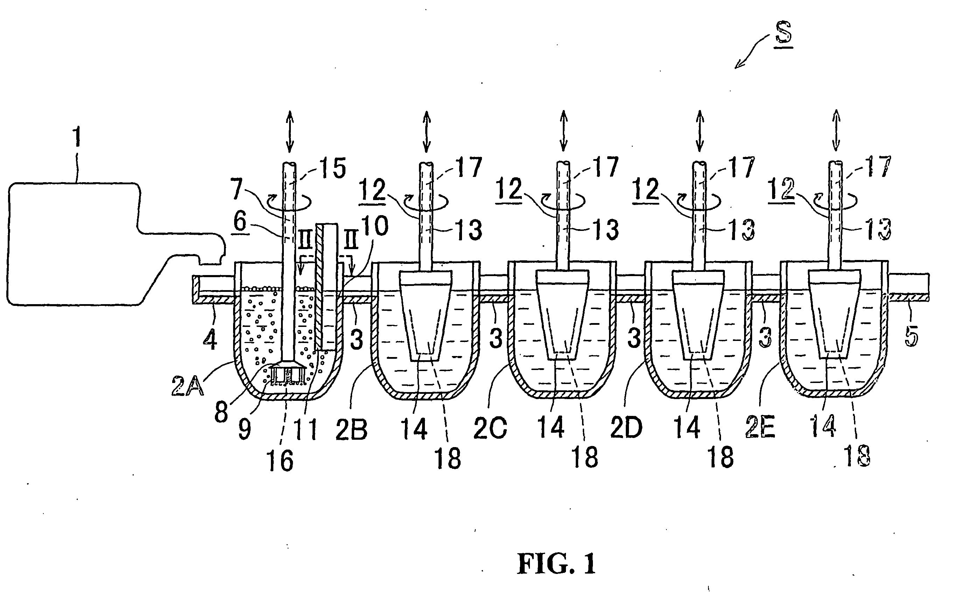

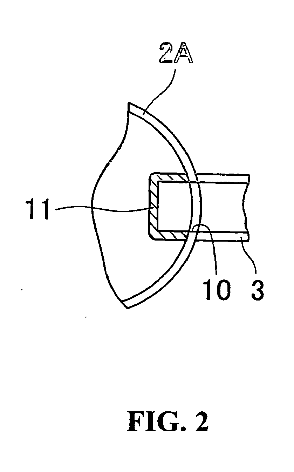

Figs. 1 and 2 show an example of a refining apparatus S for performing a method of aluminum refining according to the present invention.

The refining apparatus S is an apparatus for refining aluminum to continuously obtain a high purity aluminum, and is provided with a melting furnace 1 for melting a raw material for aluminum refining containing peritectic impurities, eutectic impurities and boron, and a plurality of crucibles 2A, 2B, 2C, 2D and 2E disposed in series at the downstream side of the melting furnace 1. In the refining method of the present invention, since a metal boride formation reaction is occurring at the melting step, the furnace plays a role not only as a furnace for melting a raw material into a molten metal, but also as a reaction chamber. The first crucible 2A disposed adjacent to the melting furnace 1 is a reaction chamber for further enhancing the reaction of boron with peritectic elements, the other crucibles, i.e., the second crucible 2B, the third crucible 2C, the fourth crucible 2D and the fifth crucible 2E, are a purification chamber for producing a high purity aluminum by segregation solidification, respectively. The adjacent crucibles 2A and 2B, 2B and 2C, 2C and 2D, 2D and 2E are connected at the upper end portions thereof in fluid communication with each other via a connecting gutter 3. The first crucible 2A is provided, at its upper end portion, with a receiving gutter 4 for receiving a molten metal supplied from the melting furnace 1, and the fifth crucible 2E disposed most apart from the melting furnace 1 is provided, at its upper end portion, with a molten metal discharging gutter 5.

Disposed in the first crucible 2A is a dispersing device 6 provided with a rotary shaft 7 which is driven in the up-and-down direction and rotated with a driving means (not shown) and a dispersing rotor 8 fixed at the lower end of the rotary shaft 7. The rotary shaft 7 is provided, at its inside, with a processing gas passage 15 extending in the longitudinal direction of the shaft, and also is provided, at its lower end, with a processing gas outlet 16 communicated with the processing gas passage 15 and a plurality of agitation enhancing protrusions 9 arranged along the peripheral direction at certain intervals. When the processing gas is supplied to the processing gas passage 15 while rotating the rotary shaft 7, the accumulated molten alloy is agitated and the processing gas is discharged as fine bubbles from the processing gas outlet 16 to the molten alloy and dispersed in the entire molten alloy. The processing gas has an effect of elimination of a generated metal boride from the molten alloy, but is not always required.

At the position corresponding to a molten alloy outlet 10 of the first crucible 2A, a vertical partition wall 11 having an approximately U-shaped horizontal cross-sectional shape is provided so as to cover from the inner side edge portion of the molten alloy outlet 10 in the first crucible 2A to the portion below the molten alloy outlet 10 in the first crucible 2A. This vertical partition wall 11 prevents an outflow of an insoluble metal boride formed by the reaction of the boron with the peritectic elements into the refining second crucible 2B.

As the aforementioned processing gas, rare gas such as Ar, inert gas inactive against an aluminum such as N₂, or gas in which Cl₂ is mixed in the aforementioned gas can be used.

Disposed in each of the second to fifth crucibles 2B to 2E is a rotary cooling device 12 provided with a rotary shaft 13 which is driven in the up-and-down direction and rotated with a driving means (not shown) and a cooling member 14 attached to the lower end of the rotary shaft 13. The rotary shaft 13 is provided, at its inside, with a cooling fluid passage 17 extending in the longitudinal direction of the shaft. The cooling member 14 is formed into an inverted truncated cone shape with a bottom in which the cross-sectional area decreases downward, and is provided with an inner space 18 communicated with the cooling fluid passage 17 so that the external peripheral surface of the cooling member in contact with the molten alloy can be kept to a temperature not higher than the solidification point by supplying the cooling fluid in the inner space 18 via the cooling fluid passage 17. Accordingly, it is preferable that the cooling member 14 is made of a material which has good thermal conduction such as graphite and does not cause contamination of the molten alloy by reacting with the aluminum molten alloy. Further, the cooling member 14 is set in height such that the portion other than the upper portion is immersed in the aluminum molten alloy.

In the aforementioned aluminum refining apparatus S, aluminum refining is performed through the following steps (i) to (vi).
(i) The dispersing device 6 for the first crucible 2A and the rotary cooling devices 12 for the second to fifth crucibles 2B to 2E are raised and held above each crucible 2A to 2E.
(ii) The melting step according to the refining method of the present invention is performed.
   A raw material for aluminum refining is melted in the melting furnace 1. In this melting step, reaction of peritectic elements with boron contained in the molten alloy starts to forme a metal boride (e.g., TiB₂, ZrB₂, VB₂) which is a compound thereof
(iii) The reaction steps according to the refining method of the present invention are performed.

A molten metal is supplied from the melting furnace 1 to the first crucible 2A. Subsequently, the dispersing rotor 8 is immersed in the molten metal by descending the rotary shaft 7 of the dispersing device 6, and the processing gas is supplied to the processing gas passage 15 while rotating the rotary shaft 7. This causes agitation of the molten metal and discharge of the processing gas as fine bubbles through the processing gas outlet 16 of the dispersing rotor 8. In this step, peritectic element continuously reacts with boron, the reaction for forming a metal boride further progresses. The metal boride to be formed is insoluble, and comes up to the molten metal surface due to the agitation of the molten metal and the processing gas bubbles to become floating slag. The floating slag can be removed by any known method. Thus, peritectic element is removed from the molten metal. Furthermore, insoluble impurities among impurities contained in the molten metal come up by the processing gas bubbles, and will be removed as floating slag together with the metal boride.

In this invention, since an aluminum refining raw material containing a certain amount of boron is used, it is not required to add boron at this step. However, the invention does not prohibit such addition. In the case of adding boron at this step, the excessive amount in the total of boron contained in the aluminum refining raw material and the added boron should fall within the range not exceeding 80 mass ppm because if the excessive amount exceeds 80 mass ppm, the concentration of unreacted boron in the refined lump becomes high. Boron can be added as an A1-B mother alloy for example. Even if the amount of oxide of aluminum increases due to KF or AlF₃ contained in the Al-B mother alloy, the oxide of aluminum goes up together with processing gas bubbles and can be removed as floating slag together with a metal boride.

Furthermore, the floating slag is prevented from the outward flow by the partition wall 11.
(iv) The molten metal from which floating slag in the first crucible 2A was removed is supplied to the second crucible 2B via the molten alloy outlet 10, then to the third crucible 2C, the fourth crucible 2D and the fifth crucible 2E via the connecting gutter 3 in turn.
(v) The segregation solidification step of the refining method according to the present invention is executed.
   When the molten metal amount in the second to fifth crucibles 2B to 2E reaches a certain amount, each cooling member 14 is immersed in the molten alloy by descending the rotating shaft 13 of the rotary cooling device 12. Then, the cooling fluid is supplied to the inner space 18 of the rotary cooling member 14 via the cooling fluid passage 17 of the rotary shaft 13, and the rotary shaft 13 and the cooling member 14 are rotated while keeping the temperature of the external surface of the cooling member to a temperature not higher than the solidification point of aluminum. At this time, the molten metal in each crucible 2B to 2E is heated and held at a temperature exceeding the solidification point. Then, by the segregation solidification principle, an aluminum of purity higher than that of the molten metal is crystallized on the external peripheral surface of the cooling member 14, thereby forming high purity aluminum lump. Furthermore, by the rotation of the cooling member 14, a metal boride which was not removed at the previous steps can be kept away from the solidification boundary to thereby prevent the mixing of the metal boride into the aluminum lump to be crystallized on the surface of the cooling member 14. On the other hand, the molten metal which was not solidified and became high in eutectic impurity concentration will be discharged from the molten metal discharging gutter 5.
(vi) When a certain amount of high purity aluminum lump is formed on each cooling member 14, the refining operation can be terminated.

Since floating slag is removed at the first crucible 2A, the clogging of the connecting gutter 3 and the molten metal discharging gutter 5 can be prevented when the molten metal passes.

In the method of aluminum refining according to the present invention, since a raw material for aluminum refining contains boron in the amount exceeding the chemical equivalent calculated as a metal boride with the peritectic element, the metal boride forming reaction starts at the step of the melting. Accordingly, the retaining period in the melting furnace also contributes to the creation of a metal boride, keeping longer reaction time. Thus, a larger amount of peritectic element can be converted into a metal boride, which in turn can reduce the unreacted peritectric element as much as possible. Furthermore, the sufficient reacting time can reduce the excessive amount of boron, which in turn can reduce the boron concentration remained as unreacted. Furthermore, the thermal energy required for the melting can be effectively utilized for the metal boride creation reaction, resulting in reduced energy cost.

In the method of aluminum refining of the present invention, the detail of each step is not limited to the aforementioned embodiment.

For example, it is possible to remove peritectic elements by executing a melting step and a reacting step. The present invention include a refining method in which segregation solidification step for removing an eutectic element is not performed because the segregation solidification step does not contribute to removing of peritectic elements. The aluminum refined through the melting step and the reacting step can be used as an application in which the eutectic element concentration in the aluminum refining raw material is allowed.

In the reacting step, the agitation of the molten metal and the introduction of the processing gas enhance the reaction to shorten the processing time, and also isolate the formed metal boride as the floating slag, which in turn makes it easy to remove the floating slag. The agitation method and the processing gas introduction method are not specifically limited. For example, the agitation and the processing gas introduction can be performed by separate devices. Furthermore, a heat resistant porous member such as ceramics is fitted in the bottom wall of the first crucible 2A so that the processing gas is introduced in the first crucible 2A via the porous member. Furthermore, the separating/removing method of a formed metal boride is not limited to the floating separation method using processing gas, and can be a method using a means such as a means for separation by sedimentation or a means for filtering separation.

In the segregation solidification step, a method of obtaining a high purity aluminum is not limited to the method using the solidification to the surface of the cooling member as explained in the aforementioned embodiment so long as an aluminum crystallized from the mother liquid can be collected. Furthermore, the shape of the cooling member and the cooling method are also not specifically limited.

In the aforementioned embodiment, the melting step, the reacting step and the segregation solidification step are continuously performed by moving the molten metal using a melting furnace and a plurality of crucibles (reaction chamber, purification chamber). Such continuous processing is excellent in productivity. However, the present invention is not limited to such continuous processing, but can be performed by a batch method in which each step is performed in a single processing chamber.

Since the high purity aluminum material according to the present invention is refined by the aforementioned method, high purity can be attained. As the high purity aluminum material according to the present invention, an aluminum material having a chemical composition in which the aluminum purity is 99.5 mass% or above, the Ti concentration is 20 ppm or less, the Zr concentration is 15 mass ppm or less, the V concentration is 20 mass% or less can be exemplified, though it depends on the concentration of peritectic elements and eutectic elements contained as impurities. In cases where eutectic elements were removed by segregation solidification, B concentration is 20 mass% or less. Such high purity aluminum material can be preferably used as, for example, a material for manufacturing various electronic members and a material for manufacturing electrolytic capacitor electrodes.

An aluminum material for electrolytic capacitor electrodes can be manufactured by executing chemical composition control to the high purity aluminum material obtained through the aforementioned melting step, the reacting step, and the segregation solidification step if necessary, and further executing a forming step for forming it into a predetermined shape. Although an aluminum foil with a thickness of 15 to 120 µm is currently used as electrode materials for electrolytic capacitors, in recent years, there is a tendency that a thicker foil falling within the aforementioned range is used to increase the capacitance. And furthermore, it can be expected to go in the direction of a thicker foil. In view of the current situation and the future tendency, in the present invention, it is recommended that a thickness of an aluminum member be 10 to 200 µm. Accordingly, as the aforementioned forming step, a step including a rolling by which the final thickness is made to be 10 to 200 µm can be exemplified. Furthermore, steps to be executed before the final rolling, e.g., an ingot manufacturing step including chemical composition control, a hot rolling sep, a cold rolling step, a heat treatment, a heat treatment to be executed after the final rolling, can be performed by any known method. The aforementioned aluminum material includes both of an aluminum material with a thickness of 200 pm or less called "foil" and an aluminum material with a thickness exceeding 200 µm.

Furthermore, the aluminum material for electrolytic capacitor electrodes according to the present invention includes not only an aluminum material which is rolled into the aforementioned thickness and then further processed into a thickness as a final electrode material but also an aluminum material which is an ingot to be subjected to rolling and a thick plate in the middle of rolling steps. The configuration and/or the forming method for forming into the configuration are not limited to the above. Any heat treatment can be performed during the forming steps.

The aluminum material for electrolytic capacitor electrodes manufactured by the aforementioned method has high aluminum purity and excellent etching characteristic, and therefore can attain high capacitance by subjecting it to etching and formation of the dielectric.

### EXAMPLE

Using the aluminum refining apparatus S shown in Figs. 1 and 2, refining of an aluminum refining raw material was executed.

Tables 1 and 2 show the Ti concentration, the Zr concentration, the V concentration and the B concentration of the aluminum refining material ingot used in Examples 1 to 7 and Comparative Examples 8 to 10. In all of Examples and Comparative Examples, the concentration of Ti, that of Zr and that of V are common: Ti: 51 mass ppm, Zr: 30 mass ppm, and V: 48 mass ppm. As to the B concentration, in Examples 1 to 7 and Comparative Examples 8 and 9, it contained an excessive amount falling within the range of from 3 to 90 mass ppm excessive to the total chemical equivalent (50.4 mass ppm) calculated as TiB₂, ZrV₂, and VB₂. In Comparative Example 10, the B concentration in the material ingot was 10 mass ppm, and an excessive B was added during the reaction step. In Table 1, in each of Examples 1 to 7 and Comparative Examples 8 and 9, an excessive B concentration in the aluminum refining material ingot is shown. In Comparative Example 10, the actual B concentration in the material ingot and the excessive added amount in the molten metal are shown.

These aluminum refining raw material ingots were refined by the following steps.

In the aluminum refining apparatus S, Ar gas was used as the processing gas to be supplied to the first crucible 2A. Furthermore, as the cooling member 14 of the rotary cooling device 12 for the second to fifth crucibles 2B to 2E, a cooling member of an inverted circular truncated cone shape in which the external diameter of the upper end was 150 mm and the external diameter of the lower end was 100 mm was used.

### [Examples 1 to 7, Comparative Examples 8 and 9]

In the melting furnace 1, an aluminum refining raw material ingot was melted at about 750 °C, and the molten metal was supplied to the first crucible 2A. Then, the dispersing rotor 8 of the dispersing device 6 was immersed in the molten alloy, and the molten alloy was agitated by the rotation of the rotary shaft 7 while supplying the processing gas at the rate of 3 1/min. Floating slag (TiB₂, ZrB₂, VB₂) floated due to the agitation of the molten alloy and the supply of the processing gas was removed. The molten metal from which the floating slag was removed was supplied to the second to fifth crucibles 2B to 2E in turn.

The molten metal supplied to the second to fifth crucibles 2B to 2E was heated and held at 670 °C. The cooling member 14 of the rotary cooling device 12 was immersed in the molten metal, and rotated at the rate of 400 rpm while supplying cooling fluid in the inner space 18 and holding the temperature of the external surface of the cooling member below the solidification temperature. Such operation was continued for 30 minutes. As a result, a refined aluminum lump of 5 to 6 kg was formed on the external periphery of each cooling member 14.

The aforementioned steps from the melting of the aluminum refining raw material ingot to the forming of the refined aluminum lump were performed continuously, and it took about 3 hours to melt the aluminum refining raw material ingot. The average retaining period in the aluminum melting furnace 1 was about 15 minutes.

Thereafter, the refined aluminum lump was collected and the elemental analyses of Ti, Zr, V and B concentration were performed. Furthermore, the analysis of the aluminum purity was also performed. The results are also show in Table 1.

### [Comparative Example 10]

In the first crucible 2A, before activating the dispersing device 6, an Al-B alloy was added so that the B concentration of the molten metal excessively contains by 50 mass ppm to a total chemical equivalent calculated as TiB₂, ZrV₂ and VB₂. The other steps were performed in the same manner as in the aforementioned Examples. As a result, a refined aluminum lump of 5 to 6 kg was formed on the external peripheral surface of the hollow cooling member 14. Thereafter, the refined aluminum lump was collected, and the elemental analyses of Ti, Zr, V and B concentration and the analysis of the aluminum purity were performed. The results are also shown in Table 1.

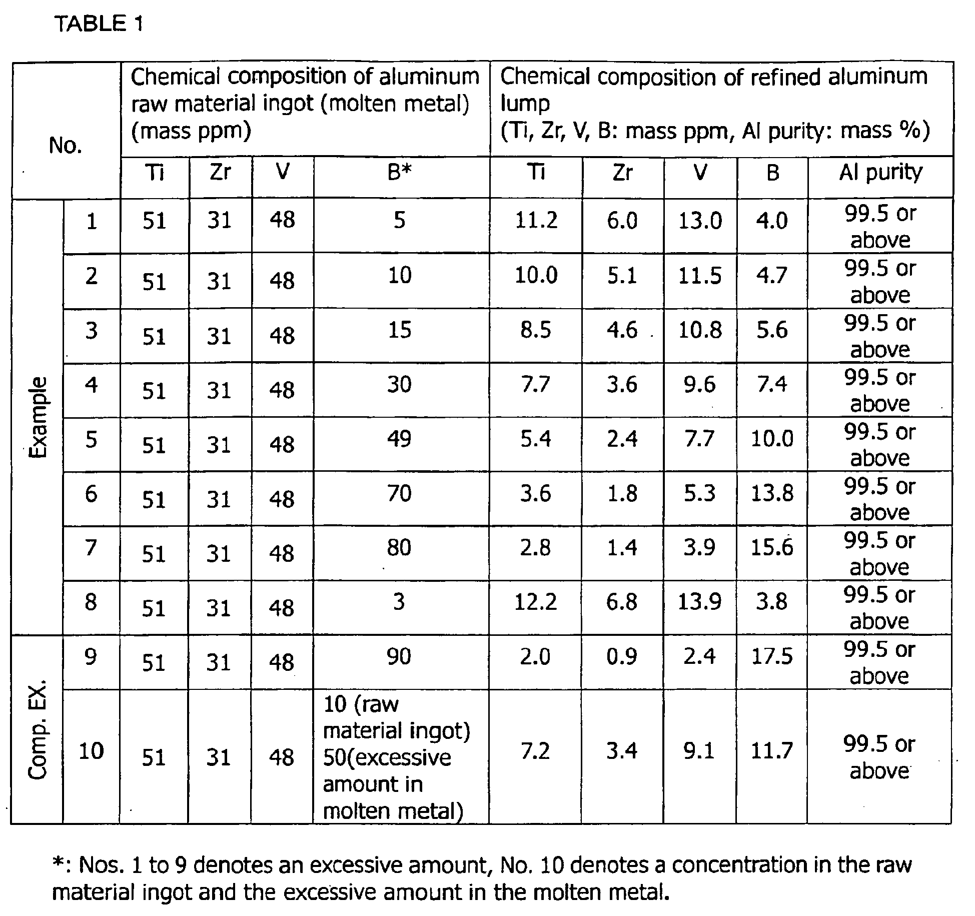

From the results shown in Table 1, it was confirmed that a high purity aluminum could be obtained by the refining using a raw material containing an excessive boron.

Comparing Example 5 with Comparative Example 10 which are almost the same in B concentration in the molten metal, it is understood that a larger amount of Ti, Zr, and V can be removed by containing excessive amount of B at the raw material stage. This can be presumed that B reacts with Ti, Zr and V at the stage of melting the raw material and therefore the amount of remained unreacted elements decreases.

Comparing Examples 1 to 7 with Comparative Examples 8 and 9, it is understood that setting of the excessive amount of B in the raw material to 5 to 80 mass% enables effective elimination of Ti, Zr and V and reduction of B concentration. In other words, in Comparative Example 8 in which the excessive amount of B is too small, Ti, Zr and V were not removed efficiently, and in Comparative Example 9 in which the excessive amount of B is too large, although Ti, Zr and V could be removed, but the B concentration became higher.

Furthermore, after melting each refining aluminum lump, each was adjusted to Fe: 20 mass ppm, Si: 20 ppm, Cu: 50 mass ppm, and Pb: 1 mass ppm to thereby obtain an aluminum ingot. To this ingot, facing was executed and homogenization of 610 °C x 10 h was executed. Then, hot rolling, cold rolling, foil rolling, intermediate annealing (270°Cx5h), final foil rolling (17% rolling reduction), and final annealing (550°C x 5h) were executed. Thus, an aluminum member (foil) having 110 µm thick was manufactured.

The aluminum member was immersed in a mixed solution of 75°C containing hydrochloric acid: 1 mol/l and sulfuric acid: 3.5 mol/l, and then subjected to electrolytic processing at the current density of 0.2 A/cm². The aluminum member after the electrolytic processing was further immersed in a hydrochloric acid-sulfuric acid mixed solution of the aforementioned composition for 360 seconds at 90 °C to increase the pit diameter. Thus, an etched aluminum member was obtained. Then, the etched aluminum member was subjected to a chemical conversion treatment at the formation voltage of 270 V in accordance with EIAJ standard, and the capacitance was measured. As a result, it was confirmed that the aluminum material manufactured from the refined aluminum ingot of each Example attained high capacitance.

The terms and expressions used herein are used only for explanatory purposes and not used to construe in a limited manner, and do not intend to eliminate any equivalent of the characterized matters disclosed and mentioned herein, and it should be understood that the present invention permits any design-change within the claimed scope of the present invention.

### Industrial applicability

A high purity aluminum can be refined by using a raw material for aluminum refining of the present invention. The refined high purity aluminum can be preferably used as a raw material for manufacturing various electronics members or electrolytic capacitor electrodes.

## Claims

1. An aluminum raw material suitable for being refined comprising:
a peritectic impurity element forming a peritectoid with aluminum, wherein the peritectic impurity element is at least one or more elements selected from the group consisting of Ti, Zr and V; and
boron,
**characterized in that**
the boron is contained excessively by 5 to 80 mass ppm to a total chemical equivalent calculated as a metal boride with the peritectic element.

2. The raw material for aluminum refining as recited in claim 1, wherein the excessive amount of the boron is 15 to 50 mass ppm.

3. An aluminum refining method, comprising:
a melting step in which the aluminum raw material is melted into a molten metal; and
a reacting step in which a metal boride is formed by reacting a peritectic impurity element with the boron in the molten metal and a formed metal boride and the metal boride formed at the melting step are removed to thereby remove the peritectic element;
**characterized in that**
the aluminum raw material is a material as recited in claim 1 or 2.

4. The aluminum refining method as recited in claim 3, wherein after the reacting step, a segregation solidification step in which a high purity aluminum from which an eutectic element containing unreacted boron is removed by segregation solidification is crystallized from the molten metal obtained in the reacting step.

5. The aluminum refining method as recited in claim 3 or 4, wherein at the reacting step, the metal boride formed is floated to a molten metal surface by injecting a processing gas in the molten metal.

6. The aluminum refining method as recited in claim 4 or 5, wherein at the segregation solidification step, a cooling member held in the molten metal at a temperature not higher than a solidification temperature of the molten metal is rotated to a crystallize a high purity aluminum on an external peripheral surface of the cooling member.

7. The aluminum refining method as recited in any one of the claims 3 to 6, wherein the molten metal obtained at the melting step is moved to a reaction chamber for executing the reacting step.

8. The aluminum refining method as recited in any one of claims 4 to 7, wherein the molten metal obtained at the reacting step is moved to a purification chamber for executing the segregation solidification step.

9. A method for manufacturing an aluminum material for electrolytic capacitor electrodes, comprising:
a melting step in which the aluminum raw material is melted into a molten material;
a reacting step in which a metal boride is formed by reacting a peritectic impurity element and boron in the molten metal and a formed metal boride and the metal boride formed at the melting step are removed to thereby remove the peritectic element;
a segregation solidification step in which after the reacting step, a high purity aluminum from which an eutectic element containing unreacted boron is removed by segregation solidification is crystallized from the molten metal obtained in the reacting step; and
a forming step for forming the high purity aluminum;
**characterized in that**
the aluminum raw material is a material as recited in claim 1 or 2.

10. The method for manufacturing an aluminum material for electrolytic capacitor electrodes as recited in claim 9, wherein the forming step includes a step for forming the high purity aluminum into a final thickness of 10 to 200 µm.

## Patentansprüche

1. Ein Aluminiumrohmaterial, welches geeignet ist, raffiniert zu werden, aufweisend:
ein peritektisches Verunreinigungselement, welches mit Aluminium ein Peritektoid formt, wobei das peritektische Verunreinigungselement zumindest ein oder mehrere Elemente ist, welche aus der Gruppe ausgewählt sind, welche aus Ti, Zr und V besteht, und
Bor,
**dadurch gekennzeichnet, dass**
das Bor im Überschuss enthalten ist um 5 bis 80 Massen-ppm bezüglich eines gesamten chemischen Äquivalents, welches als ein Metallborid mit dem peritektischen Element berechnet ist.

2. Das Rohmaterial für die Aluminiumraffination wie in Anspruch 1 wiedergegeben, wobei die überschüssige Menge an Bor 15 bis 50 Massen-ppm ist.

3. Ein Aluminiumraffinationsverfahren, aufweisend:
einen Schmelzschritt, in dem das Aluminiumrohmaterial zu einem geschmolzenen Metall geschmolzen wird, und
einen Reaktionsschritt, in dem ein Metallborid geformt wird durch Reaktion eines peritektischen Verunreinigungselements mit dem Bor in dem geschmolzenen Metall und ein geformtes Metallborid und das Metallborid, welches bei dem Schmelzschritt geformt wird, entfernt werden, um **dadurch** das peritektische Element zu entfernen,
**dadurch gekennzeichnet, dass**
das Aluminiumrohmaterial ein Material ist wie es in Anspruch 1 oder 2 wiedergegeben ist.

4. Das Aluminiumraffinationsverfahren wie es in Anspruch 3 wiedergegeben ist, wobei nach dem Reaktionsschritt ein Segregations-Verfestigungs-Schritt durchgeführt wird, in dem ein hochreines Aluminium, von dem ein eutektisches Element, enthaltend nicht reagiertes Bor, durch Segregations-Verfestigung entfernt ist, aus dem geschmolzenen Metall, welches in dem Reaktionsschritt erhalten wird, auskristallisiert wird.

5. Das Aluminiumraffinationsverfahren wie es in Anspruch 3 oder 4 wiedergegeben ist, wobei bei dem Reaktionsschritt das geformte Metallborid zu einer Oberfläche des geschmolzenen Metalls flotiert wird durch ein Einspeisen eines Prozessgases in das geschmolzene Metall.

6. Das Aluminiumraffinationsverfahren wie es in Anspruch 4 oder 5 wiedergegeben ist, wobei bei dem Segregations-Verfestigungs-Schritt ein Kühlelement, welches in das geschmolzene Metall gehalten wird, bei einer Temperatur, welche nicht höher ist als eine Erstarrungstemperatur des geschmolzenen Metalls, rotiert wird, um ein hochreines Aluminium an einer Außenumfangsfläche des Kühlelements auszukristallisieren.

7. Das Aluminiumraffinationsverfahren wie es in einem der Ansprüche 3 bis 6 wiedergegeben ist, wobei das geschmolzene Metall, welches bei dem Schmelzschritt erhalten wird, zu einer Reaktionskammer bewegt wird zum Ausführen des Reaktionsschrittes.

8. Das Aluminiumraffinationsverfahren wie es in einem der Ansprüche 4 bis 7 wiedergegeben ist, wobei das geschmolzene Metall, welches bei dem Reaktionsschritt erhalten wird, zu einer Reinigungskammer bewegt wird zum Ausführen des Segregations-Verfestigungs-Schrittes.

9. Ein Verfahren zur Herstellung eines Aluminiummaterials für Elektrolytkondensatorelektroden, aufweisend:
einen Schmelzschritt, in dem das Aluminiumrohmaterial zu einem geschmolzenen Material geschmolzen wird,
einen Reaktionsschritt, in dem ein Metallborid geformt wird durch Reaktion eines peritektischen Verunreinigungselements mit Bor in dem geschmolzenen Metall und ein geformtes Metallborid und das Metallborid, welches bei dem Schmelzschritt geformt wird, entfernt werden, um **dadurch** das peritektische Element zu entfernen,
einen Segregations-Verfestigungs-Schritt, in dem nach dem Reaktionsschritt ein hochreines Aluminium, von dem ein eutektisches Element, enthaltend nicht reagiertes Bor, durch Segregations-Verfestigung entfernt ist, aus dem geschmolzenen Metall, welches in dem Reaktionsschritt erhalten wird, auskristallisiert wird, und
einen Formschritt zum Formen des hochreinen Aluminiums,
**dadurch gekennzeichnet, dass**
das Aluminiumrohmaterial ein Material ist wie es in Anspruch 1 oder 2 wiedergegeben ist.

10. Das Verfahren zur Herstellung eines Aluminiummaterials für Elektrolytkondensatorelektroden wie es in Anspruch 9 wiedergegeben ist, wobei der Formschritt einen Schritt umfasst zum Formen des hochreinen Aluminiums in eine endgültige Dicke von 10 bis 200 µm.

## Revendications

1. Matière première en aluminium appropriée pour être affinée, comprenant :
un élément d'impureté péritectique formant un péritectoïde avec l'aluminium, dans laquelle l'élément d'impureté péritectique est au moins un ou plusieurs éléments choisis dans le groupe constitué par Ti, Zr et V ; et
du bore,
**caractérisée en ce que**
le bore est contenu en excès de 5 à 80 ppm en masse à un équivalent chimique total calculé en tant que borure de métal avec l'élément péritectique.

2. Matière première pour affinage d'aluminium selon la revendication 1, dans laquelle la quantité en excès de bore est de 15 à 50 ppm en masse.

3. Procédé d'affinage d'aluminium, comprenant :
une étape de fusion dans laquelle la matière première d'aluminium est fondue en un métal fondu ; et
une étape de réaction dans laquelle un borure de métal est formé par réaction d'un élément d'impureté péritectique avec le bore dans le métal fondu et un borure de métal formé et le borure de métal formé à l'étape de fusion sont éliminés pour ainsi éliminer l'élément péritectique ;
**caractérisé en ce que**
la matière première d'aluminium est une matière selon la revendication 1 ou 2.

4. Procédé d'affinage d'aluminium selon la revendication 3, dans lequel après l'étape de réaction, a lieu une étape de solidification par ségrégation dans laquelle un aluminium de haute pureté à partir duquel un élément eutectique contenant du bore n'ayant pas réagi est éliminé par solidification par ségrégation est cristallisé à partir du métal fondu obtenu à l'étape de réaction.

5. Procédé d'affinage d'aluminium selon la revendication 3 ou 4, dans lequel à l'étape de réaction, le borure de métal formé est amené à flotter à la surface d'un métal fondu par injection d'un gaz de traitement dans le métal fondu.

6. Procédé d'affinage d'aluminium selon la revendication 4 ou 5, dans lequel à l'étape de solidification par ségrégation, un organe de refroidissement contenu dans le métal fondu à une température non supérieure à une température de solidification du métal fondu est mis en rotation pour cristalliser un aluminium de haute pureté sur une surface périphérique externe de l'organe de refroidissement.

7. Procédé d'affinage d'aluminium selon l'une quelconque des revendications 3 à 6, dans lequel le métal fondu obtenu à l'étape de fusion est déplacé vers une chambre de réaction pour exécuter l'étape de réaction.

8. Procédé d'affinage d'aluminium selon l'une quelconque des revendications 4 à 7, dans lequel le métal fondu obtenu à l'étape de réaction est déplacé vers une chambre de purification pour exécuter l'étape de solidification par ségrégation.

9. Procédé de fabrication d'une matière d'aluminium pour des électrodes de condensateur électrolytique, comprenant :
une étape de fusion dans laquelle la matière première d'aluminium est fondue en une matière fondue ;
une étape de réaction dans laquelle un borure de métal est formé par réaction d'un élément d'impureté péritectique et de bore dans le métal fondu et un borure de métal formé et le borure de métal formé à l'étape de fusion sont éliminés pour ainsi éliminer l'élément péritectique ;
une étape de solidification par ségrégation dans laquelle après l'étape de réaction, un aluminium de haute pureté à partir duquel un élément eutectique contenant du bore n'ayant pas réagi est éliminé par solidification par ségrégation est cristallisé à partir du métal fondu obtenu à l'étape de réaction ; et
une étape de formation pour former l'aluminium de haute pureté ;
**caractérisé en ce que**
la matière première d'aluminium est une matière selon la revendication 1 ou 2.

10. Procédé de fabrication d'une matière d'aluminium pour des électrodes de condensateur électrolytique selon la revendication 9, dans lequel l'étape de formation comprend une étape pour former l'aluminium de haute pureté à une épaisseur finale de 10 à 200 µm.
